# EUROPÄISCHE PATENTANMELDUNG

(11) **EP 4 212 018 A1**
(43) Veröffentlichungstag der Anmeldung: **19.07.2023**
(21) Anmeldenummer: 23401000.7
(22) Anmeldetag: 09.01.2023
(51) Int. Cl.: A01M 7/00

(54) **LANDWIRTSCHAFTLICHES GERÄT MIT VERBESSERTER NEIGUNGSREGELUNG**

(30) Priorität: 14.01.2022 DE 102022100808
(71) Anmelder: Amazonen-Werke H. Dreyer SE & Co. KG, 49205 Hasbergen (DE)
(72) Erfinder: große Prues, Frank, 49593 Bersenbrück (DE)

(57) **Zusammenfassung**

Die Erfindung umfasst ein landwirtschaftliches Gerät (1) zum Ausbringen von Material, wie Düngemittel, Pflanzenschutzmittel oder Saatgut, umfassend ein beidseitig klappbares Verteilergestänge (10) mit einem Mittelteil (11) und zwei mit dem Mittelteil (11) durch Gelenke verbundenen seitlichen Auslegern (12 a,b), eine erste hydraulische Stellvorrichtung (14 a), um einen der Ausleger (12 a) um eine, insbesondere erste, in Fahrtrichtung des landwirtschaftlichen Geräts (1) weisende Drehachse zu bewegen eine zweite hydraulische Stellvorrichtung (14 b), um den anderen Ausleger (12 b) um eine, insbesondere zweite, in Fahrtrichtung des landwirtschaftlichen Geräts (1) weisende Drehachse zu bewegen, eine Regeleinheit (2), wobei jeweils ein Druckregelventil (16 a,b) der ersten Stellvorrichtung (14 a) und der zweiten Stellvorrichtung (14 b) zugeordnet sind, und wobei die Druckregelventile (16 a,b) von der Regeleinheit (2) ansteuerbar sind.

## Beschreibung

Die Erfindung betrifft ein landwirtschaftliches Gerät. Ferner betrifft die Erfindung ein Verfahren zur Steuerung und/oder Regelung eines landwirtschaftlichen Geräts.

Es sind vielfältige landwirtschaftliche Geräte zum Ausbringen von Material, wie Düngemittel, Pflanzenschutzmittel oder Saatgut bekannt, beispielsweise Feldspritzen. Um das Material großflächig und effizient auf dem zu bearbeitenden Feldboden auszubringen, weisen die landwirtschaftlichen Geräte ein Verteilergestänge mit mehreren Ausbringungselementen, etwa Sprühdüsen auf. Das Verteilergestänge erstreckt sich quer zur Fahrtrichtung und kann Arbeitsbreiten von bis zu 48 m aufweisen. Dabei soll im Betrieb der Abstand zwischen dem Verteilergestänge und dem Boden über die gesamte Arbeitsbreite des Verteilergestänges möglichst konstant bleiben. Das bedeutet, dass das Verteilergestänge, auch bei Unebenheiten im zu bearbeitenden Boden, möglichst parallel zum zu bearbeitenden Boden gehalten wird.

Problematisch ist es, wenn das landwirtschaftliche Nutzfahrzeug in unterschiedlich tiefen Spurrillen des Bodens, einseitig in einer Furche oder an einem Hang des zu bearbeitenden Feldes fährt. Bei derartigen Bodenunebenheiten können die Enden des Verteilergestänges in Kontakt mit dem Boden und/oder Pflanzenbestand kommen und beschädigt werden. Zusätzlich ist die homogene Verteilung des auszubringenden Materials, aufgrund der geneigten Stellung des Verteilergestänges zum Boden und/oder zum Pflanzenbestand, und damit eines größeren oder kleineren Abstandes zwischen dem Boden und/oder dem Pflanzenbestand und einzelnen Düsen, nicht mehr gegeben.

Um diese Neigung und unerwünschte Bewegungen um die Fahrzeuglängsachse auszugleichen, sind Vorrichtungen bekannt, die über eine Pendelaufhängung und über Neigungssensoren oder Abstandssensoren verfügen und welche über Stellvorrichtungen den konstanten Abstand zum Boden einzustellen versuchen.

Die Neigungsverstellung der Ausleger des Verteilergestänges erfolgt häufig durch Hydraulikzylinder und Feder-Dämpfersystemen, die mit dem jeweiligen Ausleger verbunden sind. Beispielhaft wird auf FR 2 795 913 A1, EP 1 167 095 A1 und EP 0 922 385 A1 verwiesen. Als Messgrößen gehen bei den bekannten Regelungen der Abstand zwischen dem Ausleger und dem Boden und/oder der Relativwinkel zwischen dem Ausleger und dem Maschinenrahmen ein. Die bekannten Regelungen haben den Nachteil, dass diese ungenau sind und eine Echtzeitregelung nicht erlauben.

Deshalb weist die Feldspritze gemäß EP 1 444 894 A1 eine mehrgliedrige Aufhängung auf, bei der sowohl die Signale aus der Abstandsmessung zwischen Ausleger und Boden als auch Neigungssignale, die die Relativneigung zwischen dem Fahrzeug und dem Ausleger wiedergeben, in die Regelung eingehen. Der Ausleger ist an einem höhenverstellbaren Hubrahmen um eine in Fahrtrichtung weisende Drehachse schwenkbar gelagert. Ein schwenkbarer Zwischenrahmen ist koaxial zum Ausleger am Hubrahmen angebracht. Der Zwischenrahmen und der Ausleger sind durch zwei Zentrierfedern und einen Dämpfer miteinander gekoppelt. Zwischen dem Zwischenrahmen und dem Hubrahmen ist ein Hydraulikzylinder vorgesehen.

Zur Neigungsverstellung wird der Hydraulikzylinder ein- oder ausgefahren und verschwenkt den Zwischenrahmen gegenüber dem Hubrahmen. Dadurch wird eine der beiden Zentrierfedern gelängt und die andere verkürzt. Die auf den Ausleger wirkende Federkraft zieht den Ausleger entsprechend der Bewegung des Zwischenrahmens nach, so dass dieser - bezogen auf den Zwischenrahmen - in der geneigten Endposition wieder zentriert ist. Die Zentrierfedern kompensieren überdies schnelle Relativbewegungen zwischen Fahrzeug und Ausleger, so dass der Ausleger im Betrieb lagestabil bleibt.

In die Neigungsregelung gehen einerseits die Signale aus der Bodenabstandsmessung zwischen dem Ausleger und dem Boden und andererseits ein Neigungssignal ein, das ein Maß für die auf den Ausleger wirkende Federkraft bildet. Damit kann der Hydraulikzylinder präzise angesteuert werden. Ein Übersteuern des Auslegers wird weitgehend vermieden.

Allerdings ist diese Neigungsregelung langsam. Außerdem ist der Aufbau mit dem Zwischenrahmen und den zwischen den Zwischenrahmen und den Ausleger geschalteten Federn aufwändig.

Die Aufgabe der vorliegenden Erfindung ist es daher, ein landwirtschaftliches Gerät mit verbesserter Neigungsregelung zur Verfügung zu stellen. Eine weitere Aufgabe der Erfindung ist es, ein Verfahren zur Steuerung eines landwirtschaftlichen Geräts zur Verfügung zu stellen.

Diese Aufgaben werden gelöst durch ein landwirtschaftliches Gerät gemäß Anspruch 1 und ein Verfahren nach Anspruch 10. Bevorzugte Ausführungsformen sind in den abhängigen Ansprüchen beschrieben.

Das landwirtschaftliche Gerät kann insbesondere eine Feldspritze sein. Die Feldspritze kann selbstfahrend sein. Sie kann auch eine gezogene oder getragene Feldspritze sein.

Dadurch, dass jeder der Stellvorrichtungen je ein Druckregelventil zugeordnet ist, wird eine flexible Neigungssteuerung des Verteilergestänges ermöglicht. So erlaubt das System alleine aufgrund der entsprechenden Ansteuerung der Druckregelventile sowohl ein gemeinsames An- und Abwinkeln der beiden Ausleger, ein selektives An- und Abwinkeln nur eines Auslegers, sowie ein Verkippen des gesamten Verteilergestänges.

Hier und im Folgenden ist unter dem An- und Abwinkeln eines Auslegers eine Drehbewegung des Auslegers um die jeweilige Drehachse zu verstehen. Mit anderen Worten bewirkt ein An- bzw. Abwinkeln eine Änderung des Winkels des jeweiligen Auslegers gegenüber der Horizontalen. Dabei bewegt sich der jeweilige Ausleger beim Anwinkeln vom Boden weg und zum Mittelteil des landwirtschaftlichen Geräts hin, beim Abwinkeln zum Boden hin. Ein Verkippen des Verteilergestänges bezeichnet dementsprechend ein Anwinkeln eines Auslegers bei entsprechenden Abwinkeln des anderen Auslegers. Die jeweiligen Drehachsen können zusammenfallen oder verschieden sein.

Neigungsänderungen des Verteilergestänges und/oder der Ausleger können bei dem erfindungsgemäßen landwirtschaftlichen Gerät also, anders als bei den oben beschriebenen bekannten landwirtschaftlichen Geräten, über die direkte Kontrolle der Ausleger erreicht werde n. Damit kann auf einen zusätzlichen Zwischenrahmen mit einem Hydraulikzylinder verzichtet werden.

Beispielsweise kann ein synchrones An- oder Abwinkeln der beiden Ausleger folgendermaßen erreicht werden: Die den jeweiligen Stellvorrichtungen zugeordneten Druckregelventile werden angesteuert, um einen Druck an den Stellvorrichtungen zu erzeugen, der in einem An- bzw. Abwinkeln des Auslegers resultiert. Das Anwinkeln kann durch das Erhöhen des Drucks an den Stellvorrichtungen bzw. das Zuführen hydraulischer Flüssigkeit zu den Stellvorrichtungen erfolgen. Das Abwinkeln kann durch eine geringere Druckvorgabe der Regelventile erfolgen. Der Ausleger winkelt dann beispielsweise aufgrund der Schwerkraft oder eine zusätzliche wirkende Kraft, insbesondere eine Federkraft, ab.

Ein selektives An- und Abwinkeln nur eines Auslegers kann analog erreicht werden. In diesem Fall wird das Druckregelventil des betreffenden Auslegers angesteuert, um die entsprechende Stellvorrichtung mit einem Druck zu versorgen, der zu einem An- bzw. Abwinkeln des betreffenden Auslegers führt. Die jeweils andere Stellvorrichtung, und damit der jeweils andere Ausleger, werden nicht beeinflusst, da für jede Stellvorrichtung über die Druckregelventile unabhängig ein Druck vorgegeben werden kann. Weiterhin kann das Druckregelventil der jeweils anderen Stellvorrichtung angesteuert werden, um den anliegenden Druck aufrechtzuerhalten. Damit wird der jeweils andere Ausleger in seiner momentanen Lage gehalten.

Auf der anderen Seite ist es mit dem System auch möglich, das gesamte Verteilergestänge zu verkippen. Hierzu wird das Druckregelventil eines der Ausleger angesteuert, um die entsprechende Stellvorrichtung mit einem Druck zu versorgen, der zu einem An- oder Abwinkeln dieses Auslegers führt. Weiterhin wird das Druckregelventil des jeweils anderen Auslegers angesteuert, um die entsprechende Stellvorrichtung mit einem Druck zu versorgen, der jeweils zu einem Ab- oder Anwinkeln dieses Auslegers führt. Dies führt zu einer gleichmäßigen gemeinsamen Drehbewegung der beiden Ausleger, wenn das Ab- bzw. Anwinkeln der Ausleger mit gleichem oder ähnlichem Betrag und/oder in entgegengesetzter Richtung erfolgt.

Weiterhin kann der ersten Stellvorrichtung, der zweiten Stellvorrichtung jeweils ein dem jeweiligen Druckregelventil zugeordnetes Sperrventil zugeordnet sein. Mit einem solchen Sperrventil kann insbesondere das Abfließen von hydraulischer Flüssigkeit aus der jeweiligen Stellvorrichtung verhindert werden. Damit können die jeweiligen Ausleger in einer gewünschten Lage verriegelt werden. Dies kann beispielsweise bei Situationen wie dem Straßentransport oder beim Ein- und Ausklappen des Verteilergestänges, in denen das Verteilergestänge über die Stellvorrichtung starr mit dem landwirtschaftlichen Gerät verbunden sein soll, wünschenswert sein.

Die Sperrventile können auch während der weiter oben beschriebenen Vorgänge des An- oder Abwinkelns bzw. Verkippens verwendet werden.

So ist es möglich, dass während eines selektiven An- oder Abwinkelns für die jeweils anderen Stellvorrichtung alternativ oder zusätzlich zum Einstellen eines Drucks am Druckregelventil das zugeordnete Sperrventil geschlossen wird. Damit wird der entsprechende Ausleger verriegelt. Werden einfachdichtende Sperrventile verwendet, können diese beispielsweise beim Anwinkeln geschlossen bleiben, sodass garantiert ist, dass keine Abwinkelbewegung erfolgt.

Falls den Druckregelventilen Sperrventile zugeordnet sind, so können diese nach dem Beenden des An- oder Abwinkelns bzw. des Verkippens, geschlossen werden, um die Stellvorrichtungen in einem gewünschten Stellzustand zu verriegeln.

Bei aktiver Neigungsregelung sind die Sperrventile offen, um eine möglichst schnelle Regelung zu erzielen.

Den hydraulischen Vorrichtungen können weiterhin einer oder mehrere Drucksensoren zugeordnet sein. Die Drucksensoren können als Drucksensor zur direkten Druckmessung, insbesondere als Druckmessumformer, ausgebildet sein. Eine solche Ausbildung hat den Vorteil, dass hierdurch sowohl ein Relativdruck, als auch ein Absolutdruck ermittelt werden können. Weiterhin können die Drucksensoren vorzugsweise als Differenzdruckmessumformer zur Ermittlung eines Differenzdrucks, beziehungsweise eines auftretenden Druckunterschieds, ausgebildet sein. Vorteilhafterweise können die Druckmessumformer den zu messenden Druck über eine Messmembran erfassen, welche in Abhängigkeit vom jeweiligen Druck mechanisch umgeformt wird. Diese mechanische Veränderung kann wird elektronisch gemessen, als analoges oder digitales Ausgangssignal ausgegeben und beispielsweise an die Regeleinheit übermittelt werden.

Die jeweiligen Ausleger können mehrteilig ausgebildet sein. Sie können klappbare Segmente umfassen, die um in oder eine senkrecht zur Fahrrichtung verlaufende Achse bewegt werden können. Die Ausleger können weiterhin segmentweise ein- und ausgeklappt werden. Dabei können sie auch Zwischenstellungen einnehmen. Damit ist es möglich, die Arbeitsbreite des landwirtschaftlichen Geräts anzupassen, indem eine bestimmte Anzahl von Segmenten ausgeklappt wird und/oder das Ausklappen eines oder mehrerer Segmente nicht vollständig in einer Endposition senkrecht zur Fahrtrichtung fortgesetzt wird. Dies kann insbesondere für einen Ausleger unabhängig von dem anderen Ausleger geschehen. An zwischen den klappbaren Segmenten liegenden Gelenken können jeweils Sensoren, insbesondere Potentiometer, zur Ermittlung der Klappzustände angebracht sein. Diese Sensoren können sowohl vollständig eingeklappte / ausgeklappte Segmente als auch Zwischenstellungen an den Gelenken zwischen benachbarten Segmenten feststellen sowie den jeweiligen Klappzustand an die Regeleinheit übermitteln.

Die hydraulischen Stellvorrichtungen können über die Druckregelventile und die ggf. zugeordneten Sperrventile mit einem Hydraulikkreislauf verbunden sein. Der Hydraulikkreislauf kann ein offener Kreislauf sein, der beispielsweise eine Pumpe und einen Hydrauliktank umfasst.

Die Regeleinheit kann so konfiguriert sein, dass die Druckregelventile beim Öffnen der Sperrventile an einen zugehörigen Start-Solldruck angepasst sind. Ein solcher Start-Solldruck kann beispielsweise in einem der Regeleinheit zugeordneten Speicher abgelegt sein. Insbesondere ist es möglich, eine Vielzahl von Start-Solldruckwerten vorzusehen, wobei jeweils einem Klappzustand eines Auslegers ein Start-Solldruckwert zugeordnet ist. Da es beim Öffnen der Sperrventile prinzipiell zu unkontrollierten Bewegungen des Verteilergestänges kommen kann, kann die Regelung der Neigungseinstellung beim Öffnen der Sperrventile möglichst genau ausgehend von einem zugeordneten Start-Solldruckwert erfolgen. Dieser wird vorzugsweise bereits unmittelbar vor dem Öffnen eingestellt und während des Öffnens beibehalten. Auf diese Weise kann unkontrollierten Bewegungen des Verteilergestänges besonders schnell und effizient entgegengewirkt werden. Der Druck kann dazu insbesondere an den Stellvorrichtungen vor dem Öffnen der Sperrventile ermittelt werden. Das Ermitteln kann über eine direkte Druckmessung, die Messung einer Stellvertretergröße oder rechnerische Bestimmung basierend auf Klappzuständen erfolgen.

Die Druckregelventile können zum Einhalten eines verbraucherseitigen Drucks in Abhängigkeit von einem elektrischen Steuersignal, insbesondere Steuerstrom, ausgebildet sein.

Das Druckregelventil ist dann beispielsweise ein direktgesteuertes und federbelastetes Dreiwegeventil beispielsweise in Schieberbauart. Im stromlosen Zustand bzw. ohne Steuersignal wird der Druck am Verbraucher zum Tank entlastet. Bei maximalem Steuersignal wird der maximal mögliche Druck (entweder der Druckversorgung oder der maximale Wert des Druckregelventils) auf den Verbraucher eingeregelt.

Bei Anlegen eines Steuersignals wird der Federbelastung im Ventil elektromagnetisch entgegengewirkt und der Druck auf der Verbraucherseite dadurch entsprechend der Steuerkennlinie des Ventils konstant gehalten. Beispielsweise ist der eingestellte Druck dann proportional zum Steuersignal, das insbesondere ein Steuerstrom ist. Eine solche proportionale Steuerkennlinie ist jedoch nicht zwingend erforderlich und kann beispielsweise aus Kostengründen durch eine nichtproportionale Ansteuerung ersetzt werden. Hierfür können beliebige Steuerkennlinien in der Regeleinheit abgelegt sein, um Steuersignale passend zu einzelnen Solldruckwerten zu berechnen und auszugeben.

Die Ventile können insbesondere einen Ventilkörper mit einem Regelkolben, einer Rückstellfeder und einer Magnetspule mit Magnetanker zur elektrischen Betätigung umfassen. Wenn ein elektrisches Signal über die Regeleinheit angelegt wird, kann der Magnetanker mit einer dem Signal entsprechenden Kraft auf den Regelkolben drücken. Dadurch kann Öl durch das Ventil strömen und Druck auf- oder abgebaut werden, wodurch die Stellvorrichtung aktiviert werden kann. Dies geschieht solange, bis der anliegende Druck dem Solldruck gemäß elektrischem Signal entspricht.

Generell beruht die Funktionsweise von Proportionaldruckregelventilen auf einer Regelung eines auftretenden Druckunterschieds. Wird ein voreingestelltes Druckniveau unterschritten, führt das Ventil selbsttätig Öl aus dem Hydraulikreservoir zu, bis der Sollwert wieder erreicht ist. Andernfalls wird bei einem zu hohen Druckniveau Öl abgelassen. Der Einsatz von Proportionaldruckregelventilen bietet effiziente Steuer- und Stabilitätseigenschaften, sowie eine geringe Hysterese der Ventile, welche aufgrund von Reibung und Magnetisierung entstehen kann. Weiterhin ermöglichen Proportionalventile einen platzsparenden Einbau, sowie eine einfache Montage und Austauschbarkeit.

Die Druckregelventile können anhand einer bekannten Kennlinie elektronisch gesteuert auf einen Sollwert einstellbar sein. Die Kennlinien beschreiben beispielsweise den Zusammenhang zwischen einem auftretenden Druck und dem zugehörigen benötigten elektrischen Strom an einer Steuerspule des Ventils. Beispielhaft kann über die oben beschriebenen Drucksensoren ein einzustellender Sollwert der Druckregelventile ermittelt werden, wodurch anhand der Kennlinie ein Steuerstrom auf die Ventile geschaltet wird, um den entsprechenden Druck einzustellen. Dies hat den Vorteil, dass über die Kennlinie der Druckregelventile der Druck auf das Verteilergestänge präzise an einen Sollwert angepasst werden kann. Ein solcher Sollwert kann auch einem der oben erwähnten Start-Solldruckwerten entsprechen.

Das landwirtschaftliche Gerät kann weiterhin eine einem Ausleger zugeordnete Sensorvorrichtung umfassen. Die Sensorvorrichtung kann beispielsweise zum Erfassen einer auf den jeweiligen Ausleger wirkenden Vertikalbeschleunigung des jeweiligen Auslegers vorgesehen sein. Eine solche Vertikalbeschleunigung kann beispielsweise auftreten, wenn das landwirtschaftliche Gerät über ein Hindernis, beispielsweise eine Bodenunebenheit, fährt. Die Messung der Vertikalbeschleunigung erlaubt es, die aufgrund einer solchen Vertikalbeschleunigung an dem Ausleger angreifenden Kräfte zu bestimmen. Aus diesen kann wiederum auf die Kräfte, die auf eine dem jeweiligen Ausleger zugeordnete hydraulische Stellvorrichtung wirken, rückgeschlossen werden. Damit kann der Druck bestimmt werden, der als Reaktion auf diese Kräfte, insbesondere zur Kompensation dieser Kräfte, an dem Druckregelventil eingestellt werden soll.

Die Sensorvorrichtung kann beispielswese einen Beschleunigungssensor, insbesondere zur Erfassung der Vertikalbeschleunigungen, umfassen. Sie kann weiterhin einen Drehratensensor umfassen. Der Beschleunigungssensor und der Drehratensensor können separate Sensoren sein. Alternativ kann es sich um einen kombinierten Drehraten- und Beschleunigungssensor handeln. Der Beschleunigungssensor kann auf dem landwirtschaftlichen Gerät angebracht sein. Alternativ oder zusätzlich kann sich ein kombinierter Drehraten- und Beschleunigungssensor an dem jeweiligen Ausleger befinden. Insbesondere kann der Beschleunigungssensor nahe der jeweiligen Drehachse des Auslegers befestigt sein, wobei nahe hier meint, dass der Abstand des Sensors zur Drehachse kleiner 0,5 m, insbesondere kleiner 0,1 m ist. Bei einer solchen Konfiguration erfasst der Sensor nahezu keine Beschleunigungen, die aus einer Drehbewegung des Auslegers resultieren. Diese Messwerte können verwendet werden, um, wie weiter oben beschrieben, den Druck zu bestimmen, der an den Druckregelventilen eingestellt werden soll, um Kräfte auf die Ausleger, die beispielsweise beim Überfahren eines Hindernisses auftreten, zu kompensieren. Vorteilhafterweise werden hierfür so genannte inertiale Messeinheiten (IMU = Inertial Measuring Unit) verwendet. Solche Sensoren sind relativ kostengünstig.

Anderseits kann es vorteilhaft sein, die tatsächlich am Ausleger wirkende Beschleunigung zu bestimmen. Diese setzt sich zusammen aus der "externen" Vertikalbeschleunigung, die beispielsweise aufgrund des Überfahrens einer Bodenunebenheit auf das Gerät wirkt, der Beschleunigung, die aufgrund von Schwingungen des Auslegers auftritt, und der Beschleunigung, die aus der darauffolgenden Regelung resultiert. Für diesen Fall kann der Beschleunigungssensor am Ausleger mit einem festgelegten Abstand von der jeweiligen Drehachse angebracht sein. Dabei ist mit dem Abstand zur Drehachse der Normalabstand des Befestigungspunktes zur Drehachse gemeint. Insbesondere kann der Abstand zwischen 1 m und 3 m betragen, insbesondere zwischen 1 m und 2 m. Eine solche Anordnung des Sensors erlaubt es, sowohl die Vertikalbeschleunigung des Auslegers und, da der Abstand zwischen Drehpunkt und Sensor bekannt ist, auch die Rotationsbeschleunigung des Auslegers zu ermitteln. Dies ist vorteilhaft, da damit ein geschlossener Regelkreis für die auf den Ausleger wirkende Beschleunigung realisiert werden kann. Die Soll-Beschleunigung für einen solchen Regelkreis kann insbesondere 0 m/s² oder Erdbeschleunigung, also 9,81 m/s² betragen. Auch hier können IMUs verwendet werden.

Es ist weiterhin möglich, die eben beschriebenen Anordnungen zu kombinieren, d.h., einen ersten Beschleunigungssensor in der Nähe der Drehachse vorzusehen, und einen zweiten Beschleunigungssensor am Ausleger mit einem Abstand zur jeweiligen Drehachse anzubringen. Damit ist es möglich, durch Verarbeitung der Sensorwerte beider Sensoren die reine Rotationsbeschleunigung des Auslegers zu bestimmen. Dies kann beispielsweise über eine Differenzbildung der Sensorwerte geschehen. Durch eine solche Kombination kann erreicht werden, dass sowohl Kräfte, die aufgrund einer Vertikalbewegung des landwirtschaftlichen Geräts auftreten, als auch Kräfte, die aufgrund einer Drehbewegung eines Auslegers auftreten, präzise bestimmt werden können. Damit ist es auch möglich, auf diese Kräfte zu reagieren, insbesondere durch entsprechende Ansteuerung der jeweiligen Druckregelventile.

Alternativ oder zusätzlich zu den beschriebenen Sensoren kann die Sensorvorrichtung einen oder mehrere Sensoren umfassen. Beispielsweise kann die Sensorvorrichtung weitere Sensoren zur Messung eines Abstandes des Auslegers vom Boden umfassen. Solche Sensoren können beispielsweise als Ultraschallabstandssensoren ausgebildet sein. Aus den gemessenen Abständen kann die Lage des Auslegers relativ zum Boden abgeleitet werden. Zusätzlich oder alternativ kann die Sensorvorrichtung Sensoren zur Bestimmung einer Drehrate des Auslegers zu bestimmen. Zusätzlich oder alternativ kann die Sensorvorrichtung weitere Sensoren am Verteilergestänge umfassen, die dazu konfiguriert sind, eine Rotation um eine Klappachse und/oder eine Position eines Gestängeabschnitts und/oder Auslegers zu bestimmen. Diese Sensoren können beispielsweise als Potentiometer ausgebildet sein. Das Potentiometer ermittelt hierbei, ob ein einzelner Gestängeabschnitt oder auch der gesamte Ausleger aus seiner Sollage ausgelenkt wird und wie sich dessen Position, bzw. Lage verändert. Die Sensoren können alternativ oder zusätzlich als Neigungssensoren ausgebildet sein, welche insbesondere relativ zur Schwerkraftrichtung die Lage des Auslegers zum Horizont erfassen können.

Die Regeleinheit kann dazu konfiguriert sein, die Druckregelventile basierend auf Werten der Sensorvorrichtung anzusteuern. Damit kann die Lage des jeweiligen Auslegers aufgrund der Messwerte gesteuert werden. Insbesondere können Abweichungen von einer Soll-Lage des Auslegers insbesondere während des Arbeitsvorgangs des Geräts korrigiert werden.

Bevorzugt ist die Regeleinheit dazu konfiguriert, die Lage des jeweiligen Auslegers auf eine Neigung und eine Drehrate zu regeln. Dazu wird über zumindest eine der genannten Sensorvorrichtungen die Lage des jeweiligen Auslegers ermittelt. Besonders bevorzugt erfolgt dies über eine Messung des Abstands zum Boden und/oder Pflanzenbestand. Die Drehrate wird auf einen Sollwert geregelt. Für den Fall dass die Lage des jeweiligen Auslegers gehalten werden soll ist der Sollwert der Drehrate Null. Für den Fall, dass eine Bewegung des jeweiligen Auslegers beabsichtigt ist, kann der Sollwert von Null verschieden sein, um eine kontrollierte Bewegung zu erzielen. Eine gemessene Vertikalbeschleunigung kann in dieser Regelung zusätzlich berücksichtigt werden.

Dabei ermöglicht insbesondere die Kombination von verschiedenen Messwerten in der Datenverarbeitungseinheit eine sehr präzise Einstellung der Stellvorrichtungen beziehungsweise der Druckregelventile.

Die Regeleinheit kann weiterhin dazu konfiguriert sein, die Druckregelventile, insbesondere mittels eines PID-Reglers, so anzusteuern, dass ein Sollwert der Vertikalbeschleunigung an dem jeweiligen Ausleger wirkt. Insbesondere kann die Regeleinheit die Druckventile derart ansteuern, dass die auf den jeweiligen Ausleger wirkende Vertikalbeschleunigung auf 0 m/s² oder 9,81 m/s² geregelt wird. Dadurch kann die Kraftübertragung des Auslegers auf den Mittelteil des Geräts minimiert werden.

Die Regeleinheit kann dazu konfiguriert sein, die Messdaten der Sensorvorrichtung kontinuierlich und/oder in regelmäßigen Zeitabständen zu erfassen und zu verarbeiten. Die Regeleinheit kann dazu konfiguriert sein, die Druckregelventile kontinuierlich und/oder in regelmäßigen Zeitabständen basierend auf Werten der Sensorvorrichtung anzusteuern. Die Zeitabstände können für alle Sensoren der Sensorvorrichtung gleich sein. Sie können aber auch für unterschiedliche Sensoren unterschiedlich sein. Die Zeitabstände liegen vorzugsweise zwischen 5ms bis 1s, vorzugsweise zwischen 5ms bis 100ms. Die Regeleinheit kann dazu konfiguriert sein, die Messdaten mittels eines Filters, beispielsweise eines PT1-Glieds, zu filtern. Durch die Wahl einer passenden Zeitkonstante kann hierbei beispielsweise ein Messrauschen unterdrückt werden.

Die erste und die zweite Stellvorrichtung können jeweils als Hydraulikzylinder, insbesondere als einfachwirkender Hydraulikzylinder ausgebildet sein. Derartige Zylinder bilden kostengünstige und einfache Mittel zur Steuerung des Verteilergestänges. Die einfachwirkenden Hydraulikzylinder können beispielsweise jeweils mit einem Kolben ausgebildet sein, welcher einseitig mit Druck beaufschlagbar ist.

Die jeweiligen Druckregelventile können unabhängig voneinander ansteuerbar sein. Das bedeutet, dass die Druckregelventile jeweils unabhängig über ein elektronisches Signal von der Regeleinheit angesteuert werden können. Daher ist die Regelung effizient sowohl für symmetrische, als auch für asymmetrische Klappzustände des Verteilergestänges möglich. Bei asymmetrischen Klappzuständen mit asymmetrischer Arbeitsbreite herrschen aufgrund der unterschiedlichen Masseverteilung zwangsläufig unterschiedliche Druckverhältnisse an den beiden Druckregelventilen. Durch deren unabhängige Verstellbarkeit kann auch ein asymmetrisches Verteilergestänge zuverlässig in der gewünschten, insbesondere horizontalen Lage über dem Boden gehalten werden.

Die jeweiligen Stellvorrichtungen können weiterhin dazu geeignet sein, den jeweiligen Ausleger von einer Arbeitsstellung in eine Transportstellung zu überführen. Hier ist unter einer Transportstellung eine Stellung des Auslegers zu verstehen, bei dem der Ausleger vollständig an das landwirtschaftliche Gerät angewinkelt ist. Durch Ansteuerung der Druckregelventile werden die Stellvorrichtungen jeweils mit einem Druck beaufschlagt, der geeignet ist, den jeweiligen Ausleger von der Arbeitsstellung in die Transportstellung zu überführen. Dazu kann die jeweilige Stellvorrichtung zumindest annähernd in eine Endlage verfahren werden. Durch die Verwendung derselben Stellvorrichtungen für die Neigungskontrolle und die Überführung von der Arbeits- in die Transportstellung, wird eine einfache Steuerung des Verteilergestänges ermöglicht.

Dem jeweiligen Ausleger kann jeweils wenigstens ein Mittel zugeordnet sein, welches eingerichtet ist, ein Überführen des jeweiligen Auslegers von der Transportstellung in die Arbeitsstellung zu initiieren. Dieses Mittel muss eine Kraft in den jeweiligen Ausleger einleiten, die der Wirkrichtung der jeweiligen Stellvorrichtung und/oder der Schwerkraft des Auslegers in Transportstellung entgegengesetzt ist. Dazu kann ein, insbesondere aktiv gesteuerter, Aktor zwischen dem Mittelteil und dem jeweiligen Ausleger angeordnet sein, welcher den jeweiligen Ausleger aus der Transportstellung bewegt. Der Aktor kann drucklos sein, während sich der jeweilige Ausleger in Transportstellung befindet oder in die Transportstellung bewegt wird. Alternativ oder zusätzlich kann der jeweiligen Stellvorrichtung ein Federelement zugeordnet sein, welches dem beaufschlagten Druck entgegenwirkt. Aktor und Federelement bieten den zusätzlichen Vorteil, dass das Überführen des jeweiligen Auslegers von der Arbeitsstellung in die Transportstellung gedämpft wird. Im Fall einer als einfachwirkender Hydraulikzylinder ausgeführten Stellvorrichtung kann das Federelement in der nicht mit den Druckregelventilen verbundenen Zylinderkammer angeordnet sein. Alternativ oder zusätzlich kann eine Verbindungsleitung vorgesehen sein, welche die erste und die zweite Stellvorrichtung verbindet.

Diese Verbindungsleitung kann, insbesondere dauerhaft, mit Druck beaufschlagt sein, welcher eine den jeweiligen Ausleger aus der Transportstellung herausbewegende Kraft bewirkt. Um die Verbindungsleitung mit Druck zu beaufschlagen, kann der Verbindungsleitung ein Druckregelventil zugeordnet sein, über welches der Druck in der Verbindungsleitung einstellbar ist.

Alternativ oder zusätzlich kann der Ausleger derart ausgeführt sein, dass durch Schwerkraftwirkung das Überführen von der Transportstellung in die Arbeitsstellung initiiert und/oder unterstützt wird, wenn der über die Druckregelventile eingestellte Druck in der jeweiligen Stellvorrichtung ausreichend niedrig einstellt ist. Insbesondere kann die jeweilige Stellvorrichtung für diesen Zweck zumindest zeitweise über das jeweilige Druckregelventil drucklos geschaltet sein. Bevorzugt wird eine speziell für den Überführungsvorgang von der Transportstellung in die Arbeitsstellung angepasste Kennlinie für das Druckregelventil. Diese muss über einen niedrigen Druck das Initiieren zulassen und die Bewegung des jeweiligen Auslegers kurz vor Erreichen der Arbeitsstellung über einen höheren oder ansteigenden Druck dämpfen. So können in vorteilhafter Weise zu große Kraftwirkungen auf den jeweiligen Ausleger oder Beschädigungen vermieden werden.

Das Initiieren des Überführens kann wenigstens das Überwinden eines Totpunkts umfassen, ab dem der jeweilige Ausleger sich allein durch Schwerkraftwirkung in die Arbeitsstellung bewegt.

Die Erfindung stellt weiterhin ein Verfahren nach Anspruch 10 zur Steuerung eines landwirtschaftlichen Geräts zur Verfügung. Das landwirtschaftliche Gerät kann dabei eines oder mehrere der oben beschriebenen Merkmale aufweisen. Das Verfahren umfasst die folgenden Schritte:
- Einstellen eines ersten Solldrucks an der ersten Stellvorrichtung mittels des zugeordneten Druckregelventils.
- Einstellen eines zweiten Solldrucks an der zweiten Stellvorrichtung zugeordneten Druckregelventils.

Dies ermöglicht die Einstellung eines beliebigen Klappzustandes bzw. einer beliebigen Lage des Verteilergestänges. Beispielsweise können die jeweiligen Solldrücke durch die Regetein heit aufgrund eines jeweiligen Soll-Klappzustandes und/oder einer Soll-Lage des jeweiligen Auslegers bestimmt werden. Nach Einstellung dieser Solldrücke werden die jeweiligen Ausleger in den jeweiligen Klappzustand bzw. die jeweilige Lage überführt.

Das Verfahren kann weiterhin die folgenden Schritte umfassen:
- Bestimmen von angepassten Druckwerten für die jeweilige Stellvorrichtung und/oder die Verbindungsleitung;
- Ansteuern der Regelventile zum Einstellen der bestimmten angepassten Druckwerte.

Somit kann die oben beschriebene Kompensation von Beschleunigungen und damit eine Stabilisierung der jeweiligen Ausleger und/oder eine Anpassung der Lage der jeweiligen Ausleger erreicht werden. Insbesondere wird der angepasste Druckwert derart bestimmt, dass er die auf die Stellvorrichtung wirkende Kraft möglichst kompensiert.

Das Verfahren kann weiterhin die Erfassung einer für den Abstand des Auslegers vom Boden und/oder Pflanzenbestand indikativen Größe umfassen. Jeder Ausleger und/oder das Mittelteil kann dazu zumindest einen Abstandsensor aufweisen. Dies kann beispielsweise über Ultraschallabstandssensoren oder andere für diesen Zweck bekannte Sensoren geschehen. Zusätzlich oder alternativ kann das Verfahren die Bestimmung einer für die Drehrate des Auslegers indikativen Größe umfassen. Jeder Ausleger und/oder das Mittelteil kann dazu zumindest einen Drehratensensor aufweisen. Zusätzlich oder alternativ kann das Verfahren die Erfassung einer Rotation um eine Klappachse und/oder einer Position eines Gestängeabschnitts und/oder Auslegers umfassen. Dies kann beispielsweise mittels Potentiometern geschehen. Zusätzlich oder alternativ kann das Verfahren das Bestimmen einer für die Neigung des jeweiligen Auslegers indikativen Größe umfassen. Dazu können beispielsweise die erfassten Abstände der Ausleger und/oder des Mittelteils herangezogen werden und/oder jeder Ausleger und/oder das Mittelteil einen Neigungssensor, insbesondere Beschleunigungssensor aufweisen. Das Verfahren kann zusätzlich oder alternativ das Erfassen einer für einen Druck, insbesondere Offset-Druck, der jeweiligen Stellvorrichtung indikativen Größe umfassen. Das Bestimmen der angepassten Druckwerte kann wenigstens eine der genannten Größen berücksichtigen. Das Verfahren kann weiterhin die Ansteuerung der Druckregelventile aufgrund der Erfassung eines oder mehrerer der vorgenannten Messwerte umfassen. Insbesondere kann die Ansteuerung unter Verwendung von Sollwerten für einen oder mehrere der vorgenannten Messwerte durchgeführt werden. Mit anderen Worten kann das Verfahren eine Regelung auf diese Sollwerte hin umfassen. Dabei können die angepassten Druckwerte, insbesondere mittels eines PID-Reglers, so bestimmt werden, dass an dem Ausleger ein Sollwert der Vertikalbeschleunigung wirkt.

Das Verfahren kann weiterhin die folgenden Schritte umfassen:
- Erfassen einer Vertikalbeschleunigung eines Auslegers;
- Bestimmen einer auf die jeweilige Stellvorrichtung aufgrund der erfassten Vertikalbeschleunigung wirkenden Kraft.
Dadurch wird die Genauigkeit der beschrieben Regelung weiter verbessert.

Das Verfahren kann berücksichtigen, dass eine Druckkennlinie für die Position des Auslegers hinterlegt ist. So ist beispielsweise der Druck an der Stellvorrichtung in der Arbeitsstellung am höchsten und in der Transportstellung am geringsten. Anhand der Neigung des Auslegers kann der notwendige Offset-Druck für die jeweilige Position bzw. Neigung in der Steuerung hinterlegt sein. Diese Kennlinie aus Druck und Auslegerposition bzw. Auslegerneigung kann auch initial für die Elektronik angelernt werden. Beispielsweise kann die Stellvorrichtung bis auf Anschlag ausgefahren sein. Anschließend wird der Druck so lange erhöht bis sich die Stellvorrichtung bewegt. Je weiter sich die Stellvorrichtung aus der Arbeitsstellung in Richtung Transportstellung bewegt desto geringer ist der notwendige Druck für die weitere Bewegung. Mit Hilfe einer Positions- und/oder Geschwindigkeitsregelung für die Stellvorrichtung wird sich der Druck an der Stellvorrichtung bei dem Vorgang immer weiter reduzieren. In der Software kann der eingestellte Druck in Relation zur Neigung des Auslegers hinterlegt sein. Beim Öffnen der Sperrventile wird somit die Regelung mit dem eingestellten Druck beginnen.

Bei dem Verfahren kann weiterhin ein der ersten Stellvorrichtung zugeordnetes Sperrventil nach dem Einstellen des ersten Solldrucks geschlossen werden, und das der zweiten Stellvorrichtung zugeordnete Sperrventil nach dem Einstellen des zweiten Solldrucks geschlossen werden. Auf diese Art und Weise kann erreicht werden, dass das gesamte Verteilergestänge um einen bestimmten Winkel verkippt wird, wie weiter oben beschrieben.

Weitere Merkmale und Vorteile der Erfindung werden nachfolgend anhand der beispielhaften Figuren erläutert. Dabei zeigt:
- Figuren 1a bis 1c: schematisch die Heckansicht eines landwirtschaftlichen Geräts;
- Figur 2: schematisch einen Detailausschnitt eines landwirtschaftliches Geräts;
- Figuren 3a bis 3c: schematisch Heckansichten eines landwirtschaftlichen Geräts;
- Figuren 4a bis 4c: schematisch Heckansichten eines landwirtschaftlichen Geräts;
- Figuren 5a bis 5c: schematisch die Heckansicht eines landwirtschaftlichen Geräts; und
- Figur 6a, 6b: schematisch einen Regelkreis für die Steuerung eines landwirtschaftlichen Geräts.

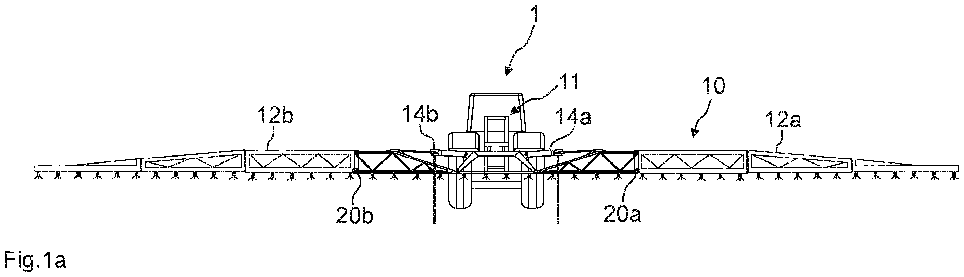

Figuren 1a bis 1c zeigen ein landwirtschaftliches Gerät 1, das als Feldspritze ausgebildet ist, in Heckansicht. Es ist zu erkennen, dass das Gerät 1 ein Verteilergestänge 10 mit einem Mittelteil 11 umfasst. Weiterhin besitzt das Verteilergestänge 10 zwei Ausleger 12 a,b, die mit dem Mittelteil 11 durch Gelenke verbunden sind. Jedem Ausleger 12 a,b ist eine Stellvorrichtung 14 a,b zugeordnet. Die Stellvorrichtungen 14 a,b sind im gezeigten Fall als einfachwirkende Hydraulikzylinder ausgebildet. Die Stellvorrichtungen 14 a,b können den jeweiligen Ausleger 12 a,b um eine jeweilige Drehachse bewegen, wobei die jeweilige Drehachse parallel zu der Fahrtrichtung des landwirtschaftlichen Geräts ist 1. Im gezeigten Fall sind die Stellvorrichtungen 14 a,b so ausgelegt, dass sie den jeweiligen Ausleger 12 a,b von einer vollständig horizontalen Stellung, die beispielsweise bei der Feldarbeit vorliegt (Arbeitsstellung), in eine komplett an das Gerät 1 angewinkelten Stellung, die beispielsweise beim Straßentransport des Geräts 1 vorliegt (Transportstellung) überführen können.

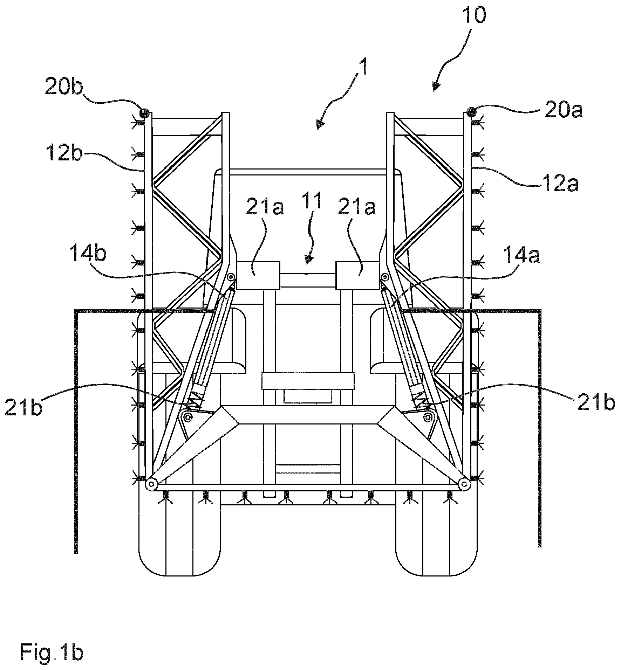

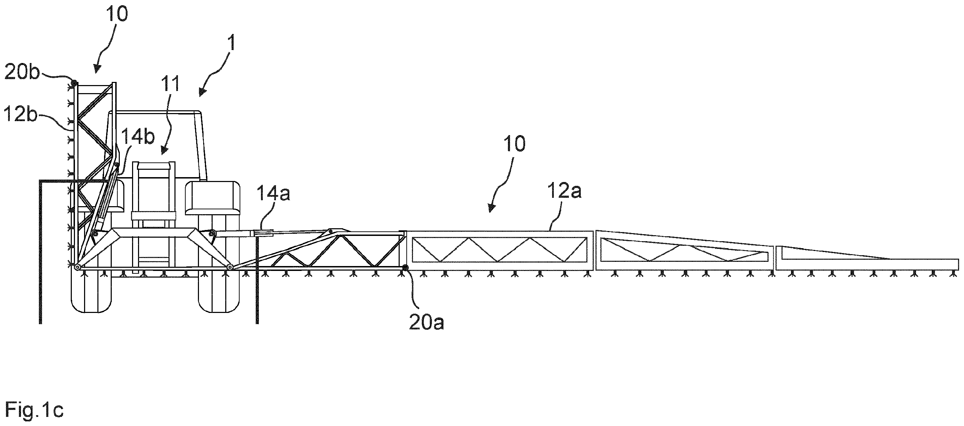

Es ist weiterhin zu sehen, dass die Ausleger 12 a,b jeweils mehrere Gestängeabschnitte aufweisen, die über klappbare Gelenke miteinander verbunden sind. Die einzelnen Gestängeabschnitte können dabei um eine horizontale oder vertikale Achse verklappt werden, so dass die Arbeitsbreite des landwirtschaftlichen Geräts angepasst werden kann. Die Gestängeabsschnitte können dabei für den jeweiligen Ausleger 12 a,b unabhängig verklappt werden. Figur 1a zeigt einen Zustand, in dem die Ausleger 12 a,b vollständig ausgeklappt sind. Figur 1b zeigt einen Zustand, in dem die Ausleger 12 a,b vollständig angewinkelt bzw. eingeklappt sind. Figur 1c zeigt einen Zustand, in dem alle Gestängeabschnitte des Auslegers 12 a ausgeklappt sind, während der Ausleger 12 b vollständig angewinkelt bzw. eingeklappt ist.

Durch Ansteuerung der Druckregelventile 16 a,b werden die Stellvorrichtungen 14 a,b jeweils mit einem Druck beaufschlagt, der geeignet ist, den jeweiligen Ausleger 12 a,b von der Arbeitsstellung in die Transportstellung zu überführen. Dazu kann die jeweilige Stellvorrichtung 14 a,b zumindest annähernd in eine Endlage verfahren werden.

Dem jeweiligen Ausleger 12 a,b ist jeweils wenigstens ein Mittel 21 a,b zugeordnet, welches eingerichtet ist, ein Überführen des jeweiligen Auslegers 12 a,b von der Transportstellung in die Arbeitsstellung zu initiieren. Dieses Mittel 21 a,b leitet eine Kraft in den jeweiligen Ausleger 12 a,b ein, die der Kraft der jeweiligen Stellvorrichtung 14 a,b entgegenwirkt. Dazu kann ein, insbesondere aktiv gesteuerter, Aktor 21 a zwischen dem Mittelteil 11 und dem jeweiligen Ausleger 12 a,b angeordnet sein, welcher den jeweiligen Ausleger 12 a,b aus der Transportstellung bewegt. Der Aktor 21 a kann drucklos sein, während sich der jeweilige Ausleger 12 a,b in Transportposition befindet oder in die Transportposition bewegt wird. Alternativ oder zusätzlich ist der jeweiligen Stellvorrichtung 14 a,b ein Federelement 21 b zugeordnet, welches dem beaufschlagten Druck entgegenwirkt. Im gezeigten Fall einer als einfachwirkenden Hydraulikzylinder ausgeführten Stellvorrichtung 14 a,b ist das Federelement 21 b in der nicht mit den Druckregelventilen 16 a,b verbundenen Zylinderkammer angeordnet.

In nicht dargestellter Weise kann der Ausleger 12 a,b derart ausgeführt sein, dass durch Schwerkraftwirkung das Überführen von der Transportstellung in die Arbeitsstellung initiiert wird, wenn der über die Druckregelventile 16 a,b eingestellte Druck in der jeweiligen Stellvorrichtung 14, a,b ausreichend niedrig einstellt ist. Insbesondere kann die jeweilige Stellvorrichtung 14 a,b für diesen Zweck zumindest zeitweise über das jeweilige Druckregelventil 16 a,b drucklos geschaltet sein. Beispielsweise wird eine speziell für den Überführungsvorgang von der Transportstellung in die Arbeitsstellung angepasste Kennlinie für das Druckregelventil 16 a,b verwendet. Diese lässt über einen niedrigen Druck das Initiieren zu und dämpft die Bewegung des jeweiligen Auslegers 12 a,b kurz vor Erreichen der Arbeitsstellung über einen höheren oder ansteigenden Druck.Das landwirtschaftliche Gerät 1 umfasst weiterhin für jeden der Ausleger 12 a,b wenigstens eine Sensorvorrichtung 20 a,b. Die Sensorvorrichtung 20 a,b kann dabei einen oder mehrere Sensoren umfassen. Insbesondere umfasst die Sensorvorrichtung 20 a,b Sensoren zur Messung der auf den Ausleger 12 a,b wirkenden Vertikalbeschleunigung. Sie kann weiterhin Sensoren zur Messung eines Abstandes des Auslegers 12 a,b vom Boden und/oder Pflanzenbestand und/oder Sensoren zur Bestimmung der Neigung des Auslegers 12 a,b und/oder Sensoren zur Bestimmung einer Winkeldrehrate des Auslegers 12 a,b und/oder Sensoren zur Bestimmung des Klappzustandes der Gestängeabschnitte des Auslegers 12 a,b umfassen. Dabei ist zu beachten, dass die Sensoren nicht alle an derselben Stelle angebracht sein müssen. In Figur 1 ist ein Sensor 20 a,b angedeutet, der sich in etwa in der Mitte des ausgeklappten Auslegers 12 a,b befindet. Diese Position ist beispielsweise dazu geeignet, die tatsächliche auf den Ausleger 12 a,b wirkende Vertikalbeschleunigung zu messen. Ferner kann das landwirtschaftliche Gerät 1 nicht dargestellte Sensoren zur Bestimmung des Drucks der jeweiligen Stellvorrichtungen 14 a,b umfassen.Die Stellvorrichtungen 14 a,b können in nicht dargestellter Weise durch eine hydraulische Verbindungsleitung verbunden sein. Beispielsweise verbindet die Verbindungsleitung in diesem Fall die jeweiligen kolbenseitigen Kammern der als Hydraulikzylinder ausgeführten Stellvorrichtung 14 a,b miteinander.

Die Verbindungsleitung kann mit einem Druckregelventil verbunden sein. Dieses kann auf einen festen Wert eingestellt sein, sodass es immer einen leichten Gegendruck erzeugt, damit die Ausleger von der Transportstellung in die Arbeitsstellung wechseln. Statt des Druckregelventils kann auch ein Druckbegrenzungsventil oder ein Rückschlagventil mit entsprechender Vorspannung vorgesehen sein. Rückschlagventil und Druckbegrenzungsventil können sich beispielsweise in der zentralen Tank-Leitung T befinden.

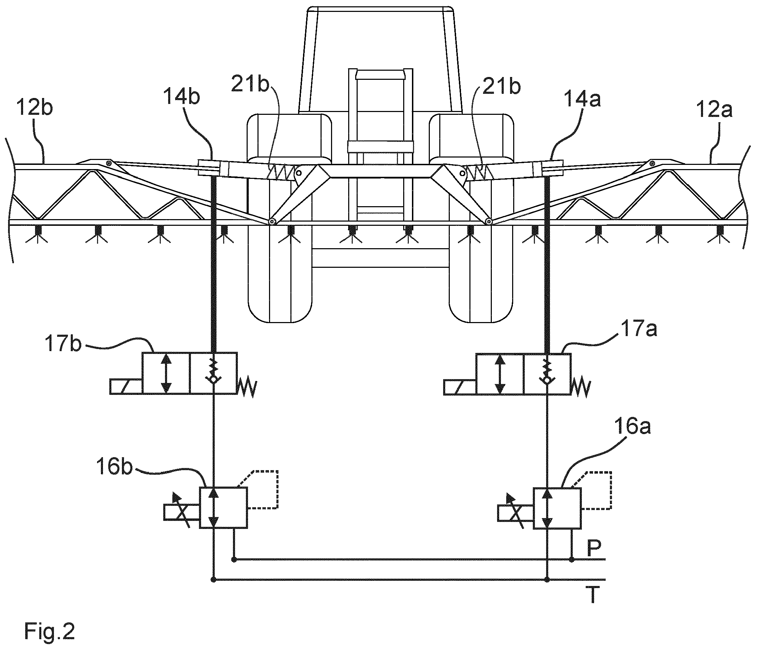

Figur 2 zeigt einen Detailausschnitt der in Figur 1 gezeigten Feldspritze. Zudem sind schematisch die hydraulischen Verbindungen und Schaltelemente dargestellt. Es ist zu sehen, dass jede der Stellvorrichtungen 14 a,b jeweils mit einem Druckregelventil 16 a,b verbunden ist. In dem gezeigten Beispiel sind die Druckregelventile 16 a,b mit den stangenseitigen Kammern der als Hydraulikzylinder ausgeführten Stellvorrichtung 14 a,b verbunden. Die Druckregelventile 16 a,b sind mit den hydraulischen Leitungen P und T eines hydraulischen Kreislaufs verbunden. Hierbei bezeichnet T die Leitung zu einem hydraulischen Tank und P die Leitung zu einer hydraulischen Pumpe.

Zwischen den Druckregelventilen 16 a,b und den Hydraulikzylindern 14 a,b ist jeweils ein Sperrventil 17 a,b angeordnet. Die Druckregelventile 16 a,b sowie die Sperrventile 17 a,b werden über die Regeleinheit 2 (nicht gezeigt) gesteuert. Dabei können die jeweiligen Ventile jeweils individuell gesteuert werden.

Die Verriegelung eines der Sperrventile 17 a,b führt dazu, dass keine hydraulische Flüssigkeit aus Richtung der Hydraulikzylinder 14 a,b in Richtung Tank abfließen kann. Damit kann sich der entsprechende Hydraulikzylinder 14 a,b nicht in der entsprechenden Richtung verschieben. Der entsprechende Ausleger 12 a,b ist damit in dieser Richtung verriegelt. Ist beispielsweise das Sperrventil 17 a verriegelt, so kann der Hydraulikzylinder 14 a nicht ausgefahren werden. Alternativ können die Sperrventile 17 a,b derart ausgeführt sein, dass ein Fließen von hydraulischer Flüssigkeit in beide Richtungen unterbunden wird, sodass der Hydraulikzylinder weder einfahren noch ausfahren kann, wenn das Sperrventil 17 a,b verriegelt ist.

Es ist zu beachten, dass bei aktiver Neigungsregelung aufgrund Messdaten der Sensorvorrichtung 20 a,b die Sperrventile 17 a,b offen sind, um eine möglichst schnelle Regelung zu erzielen.

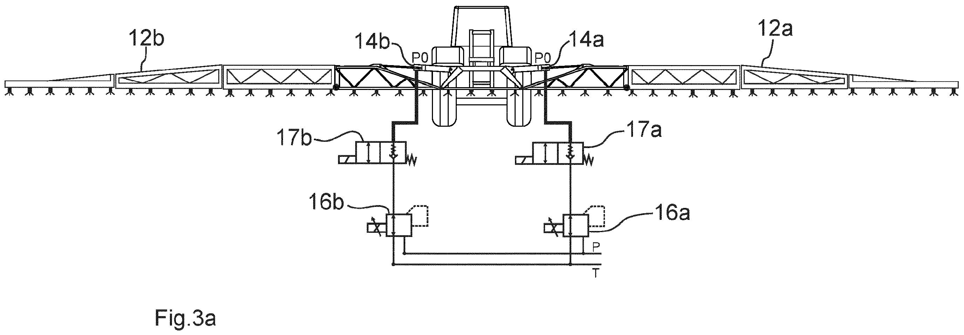

Figuren 3a bis 3c zeigen die Zustände der Ausleger 12 a,b des Verteilergestänges 10 mit den zugehörigen Stellzuständen der Druckregelventile 16 a,b und Sperrventilen 17 a,b in verschiedenen Phasen eines Klappvorganges, hier dem gemeinsamen Anwinkeln der beiden Ausleger 12 a,b.

In Figur 3a sind die Sperrventile 17 a,b verriegelt. In den beiden stangenseitigen Kammern der jeweiligen Hydraulikzylinder 14 a,b herrscht ein Druck p0 a,b. In der dargestellten Situation sind die Ausleger 12 a,b symmetrisch ausgeklappt und das landwirtschaftliche Gerät 1 steht auf ebenem Boden. Daher sind die Drücke p0 a,b in den stangenseitigen Kammern der Hydraulikzylinder 14 a,b identisch. Mit anderen Worten herrscht an beiden Hydraulikzylindern 14 a,b dieselbe Druckdifferenz zwischen der jeweiligen kolbenseitigen und der jeweiligen stangenseitigen Kammer. Im Falle einer asymmetrischen Anwinkelung, oder für den Fall, dass einer der Ausleger 12 a,b nicht vollständig ausgeklappt ist, können die erwähnten Druckdifferenzen für die Hydraulikzylinder 14 a,b unterschiedlich sein.

Wird eines oder mehrere der Sperrventile 17 a,b geöffnet, so steuert die Regeleinheit 2 das entsprechende Druckregelventil 16 a,b dergestalt an, dass ein jeweiliger Soll-Druck in den entsprechenden Zylinderkammern bzw. der hydraulischen Verbindungsleitung herrscht. Der jeweilige Soll-Druck kann beispielsweise von der Regeleinheit 2 aufgrund von voreingestellten Druckwerten für den vorliegenden Klappzustand eingestellt werden. Die Druckwerte können beispielsweise in einem Speicher der Regeleinheit 2 hinterlegt sein. Sie können aber auch aufgrund von Sensormessdaten bestimmt werden.

Hierbei ist zu bemerken, dass bei der Berechnung eines einzustellenden Soll-Drucks die Ring- und Kolbenflächen des Hydraulikzylinders berücksichtigt werden können. Denn die Hydraulikzylinder 14 a,b weisen an den zwei Seiten des Kolbens zwei verschieden große Wirkflächen auf. Die der Kolbenstange zugewandte Wirkfläche des Hydraulikzylinders ist hierbei kleiner als die der Kolbenstange abgewandten Wirkfläche. Demnach herrscht bei Kräftegleichgewicht an der Ringfläche ein unterschiedlicher, insbesondere größerer, Druck als an der Kolbenfläche.

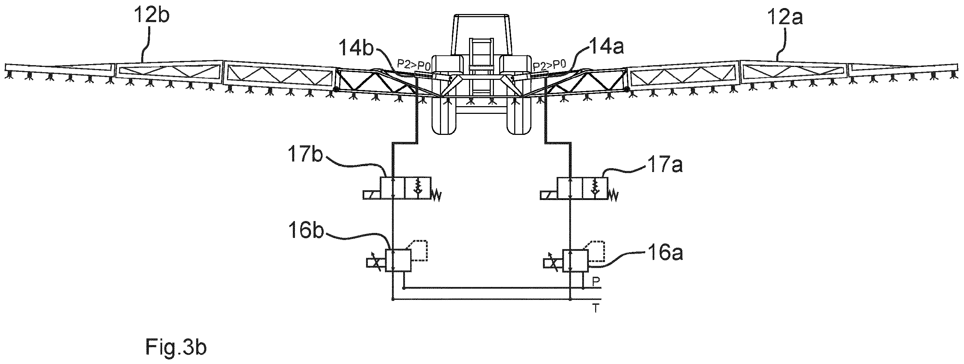

Figur 3b zeigt den Zustand während des Anwinkelns. Es ist zu sehen, dass die Sperrventile 17 a,b geöffnet sind. Wie oben beschrieben, hat die Regeleinheit 2 beim Öffnen der Sperrventile einen jeweiligen Soll-Druck in den Zylinderkammern eingestellt. Darauf folgend wird mittels der Druckregelventile 16 a,b der Druck in den stangenseitigen Kammern der Hydraulikzylinder 14 a,b gleichermaßen auf den Druck p2 erhöht. Der Druck p2 kann insbesondere einem Soll-Druck für einen gewünschten Klappzustand entsprechen. Durch die Erhöhung des Drucks in den stangenseitigen Kammern der Hydraulikzylinder 14 a,b wirkt jeweils eine Kraft auf die Ringflächen der Kolben der Hydraulikzylinder 14 a,b. Der Kolben der Hydraulikzylinder 14 a,b verschiebt sich in Richtung des Mittelteils 11. Dies resultiert in einem synchronen Anwinkeln beider Ausleger 12 a,b.

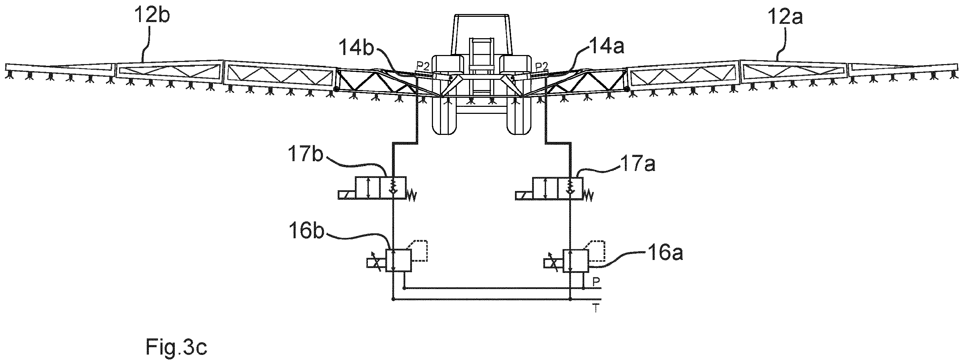

Figur 3c zeigt den Zustand nachdem das Anwinkeln abgeschlossen ist. Es ist zu sehen, dass die Sperrventile 17 a,b wieder geschlossen sind. In den stangenseitigen Kammern der Hydraulikzylinder 14 a,b herrscht der Druck p2. Die beiden Ausleger 12 a,b wurden gleichermaßen angewinkelt.

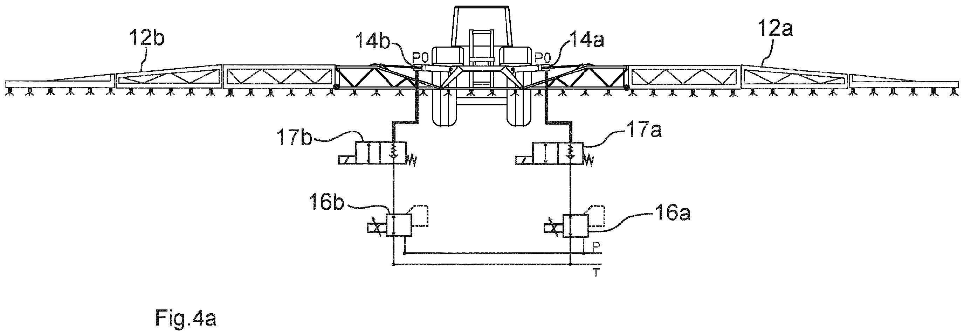

Figuren 4a bis 4c zeigen die Zustände der Ausleger 12 a,b des Verteilergestänges 10 mit den zugehörigen Stellzuständen der Druckregelventile 16 a,b und Sperrventilen 17 a,b in verschiedenen Phasen eines Vorgangs zur Änderung der Neigung, hier dem einseitigen Anwinkeln des Auslegers 12 a.

In Figur 4a sind die Sperrventile 17 a,b verriegelt. In den beiden stangenseitigen Kammern der jeweiligen Hydraulikzylinder 14 a,b herrscht ein Druck p0 a,b. In der dargestellten Situation sind die Ausleger 12 a,b symmetrisch ausgeklappt und das landwirtschaftliche Gerät 1 steht auf ebenem Boden. Daher sind die Drücke p0 a,b in den stangenseitigen Kammern der Hydraulikzylinder 14 a,b identisch. Mit anderen Worten herrscht an beiden Hydraulikzylindern 14 a,b derselbe Druck. Im Falle einer asymmetrischen Anwinkelung, oder für den Fall, dass einer der Ausleger 12 a,b nicht vollständig ausgeklappt ist, können die erwähnten Drücke für die Hydraulikzylinder 14 a,b unterschiedlich sein.

Wird eines oder mehrere der Sperrventile 17 a,b geöffnet, so steuert die Regeleinheit 2 das entsprechende Druckregelventil 16 a,b dergestalt an, dass ein jeweiliger Soll-Druck in den entsprechenden Zylinderkammern herrscht. Der jeweilige Soll-Druck kann beispielsweise von der Regeleinheit 2 aufgrund von voreingestellten Druckwerten für den vorliegenden Klappzustand eingestellt werden. Die Druckwerte können beispielsweise in einem Speicher der Regeleinheit 2 hinterlegt sein. Sie können aber auch aufgrund von Sensormessdaten bestimmt werden.

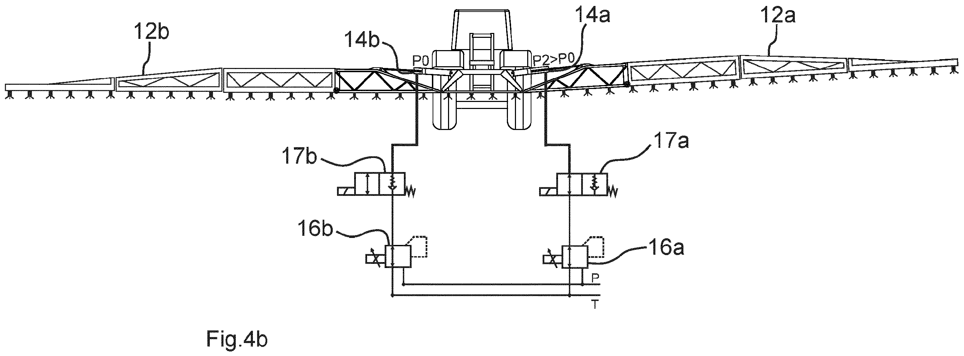

Figur 4b zeigt den Zustand während des Anwinkelns des Auslegers 12 a. Es ist zu sehen, dass das Sperrventil 17 a geöffnet worden ist, das Sperrventil 17 b jedoch weiterhin geschlossen ist. Wie oben beschrieben, hat die Regeleinheit 2 beim Öffnen der Sperrventile einen jeweiligen Soll - Druck in den Zylinderkammern eingestellt. Darauf folgend wird mittels des Druckregelventils 16 a der Druck in der stangenseitigen Kammer des Hydraulikzylinders 14 a auf den Druck p2 erhöht. Der Druck p2 kann beispielsweise einem gewünschten Klappzustand des Auslegers 12 a entsprechen. Dadurch wirkt eine Kraft auf die Ringfläche des Kolbens des Hydraulikzylinders 14 a. Der Kolben der Hydraulikzylinder 14 a verschiebt sich in Richtung des Mittelteils 11. Dies resultiert in einem Anwinkeln des Auslegers 12 a. Demgegenüber bleibt der Druck in der stangenseitigen Kammer des Hydraulikzylinders 14 b unverändert. Da das Sperrventil 17 b geschlossen, findet keine Bewegung des Kolbens des Hydraulikzylinders 14 b statt. Der Ausleger 12 b verbleibt daher in seiner Lage.

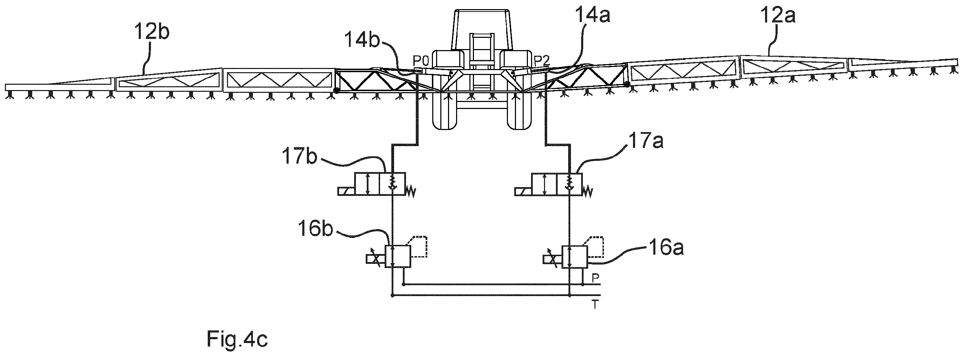

Figur 4c zeigt den Zustand nachdem das Anwinkeln des Auslegers 12 a abgeschlossen ist. Es ist zu sehen, dass alle Sperrventile 17 a,b wieder geschlossen sind. In der stangenseitigen Kammer des Hydraulikzylinders 14 a herrscht der eingestellte Druck p2, in der des Hydraulikzylinders 14 b der Druck p0.

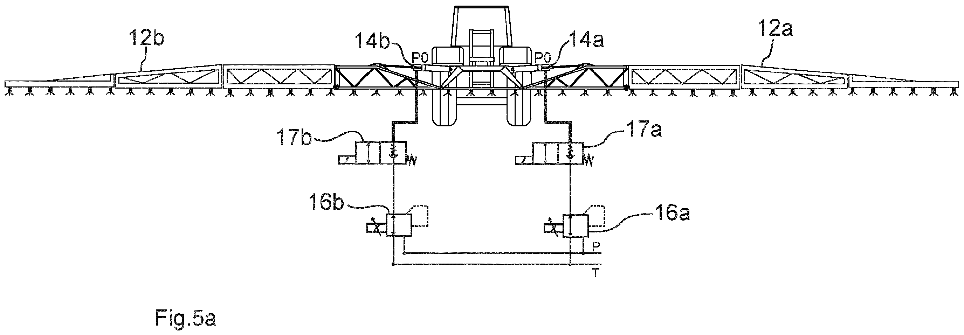

Figuren 5a bis 5c zeigen die Zustände der Ausleger 12 a,b des Verteilergestänges 10 mit den zugehörigen Stellzuständen der Druckregelventile 16 a,b und Sperrventilen 17 a,b in verschiedenen Phasen eines Vorgangs zur Änderung der Neigung, hier dem gemeinsamen Verkippen der Ausleger 12 a,b.

In Figur 5a sind die Sperrventile 17 a,b verriegelt. In den beiden stangenseitigen Kammern der jeweiligen Hydraulikzylinder 14 a,b herrscht ein Druck p0 a,b. In der dargestellten Situation sind die Ausleger 12 a,b symmetrisch ausgeklappt und das landwirtschaftliche Gerät 1 steht auf ebenem Boden. Daher sind die Drücke p0 a,b in den stangenseitigen Kammern der Hydraulikzylinder 14 a,b identisch. Mit anderen Worten herrscht an beiden Hydraulikzylindern 14 a,b der selbe Druck. Im Falle einer asymmetrischen Anwinkelung, oder für den Fall, dass einer der Ausleger 12 a,b nicht vollständig ausgeklappt ist, können die erwähnten Drücke für die Hydraulikzylinder 14 a,b unterschiedlich sein.

Wird eines oder mehrere der Sperrventile 17 a,b geöffnet, so steuert die Regeleinheit 2 das entsprechende Druckregelventil 16 a,b dergestalt an, dass ein jeweiliger Soll-Druck in den entsprechenden Zylinderkammern bzw. der hydraulischen Verbindungsleitung herrscht. Der jeweilige Soll-Druck kann beispielsweise von der Regeleinheit 2 aufgrund von voreingestellten Druckwerten für den vorliegenden Klappzustand eingestellt werden. Die Druckwerte können beispielsweise in einem Speicher der Regeleinheit 2 hinterlegt sein. Sie können aber auch aufgrund von Sensormessdaten bestimmt werden.

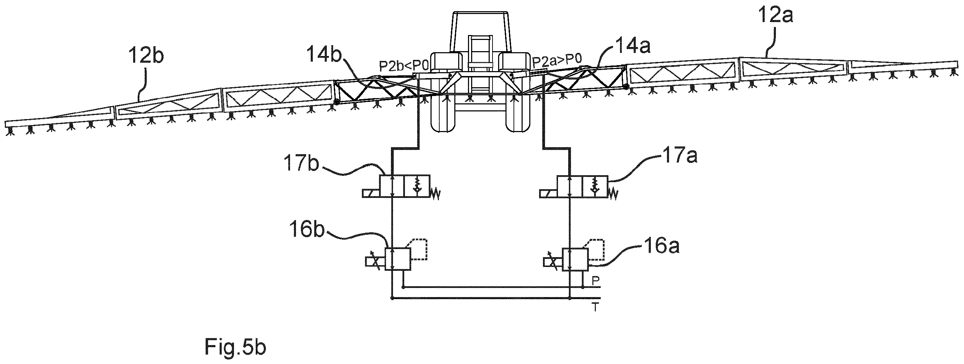

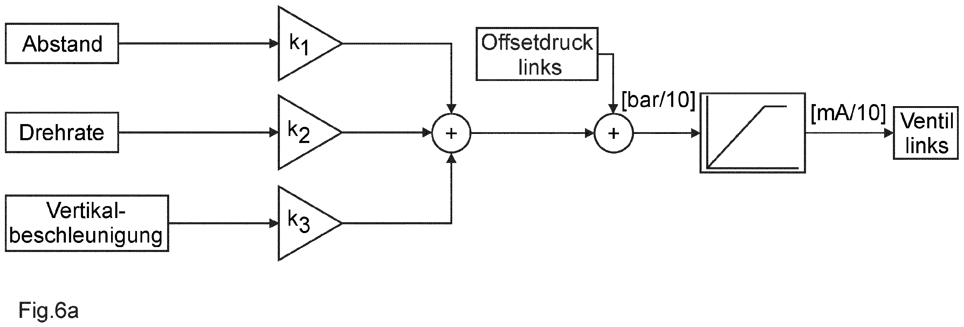

Figur 5b zeigt den Zustand während des Verkippens. Es ist zu sehen, dass das Sperrventil 17 a und das Sperrventil 17 b geöffnet sind. Wie oben beschrieben, hat die Regeleinheit 2 beim Öffnen der Sperrventile einen jeweiligen Soll-Druck in den Zylinderkammern eingestellt. Darauf folgend wird mittels des Druckregelventils 16 a der Druck in der stangenseitigen Kammer des Hydraulikzylinders 14 a auf den Druck p2 a erhöht, während der Druck in der stangenseitigen Kammer des Hydraulikzylinders 14 b mittels des Druckregelventils 16 b auf den Druck p2 b abgesenkt wird. Dabei entspricht der Druck p2 a einem voreingestellten Druck für einen Klappzustand, bei dem der Ausleger 12 a gegenüber der in Figur 5a dargestellten Ausgangslage um einen Winkel alpha angewinkelt ist. Der Druck p2 b entspricht einem voreingestellten Druck für einen Klappzustand, bei dem der Ausleger 12 b gegenüber der in Figur 6a dargestellten Ausgangslage um einen Winkel alpha abgewinkelt ist. Durch die Erhöhung des Drucks in der stangenseitigen Kammer des Hydraulikzylinders 14 a wirkt eine Kraft auf die Ringfläche des Kolbens des Hydraulikzylinders 14 a. Da gleichzeitig der Druck in der stangenseitigen Kammer des Hydraulikzylinders 14 b gesenkt wird, bewegen sich die beiden Kolben der Hydraulikzylinder 14 a,b in dieselbe Richtung (in der Figur nach links). Dies führt zu einem Anwinkeln des Auslegers 12 a und zu einem gleichzeitigen Abwinkeln des Auslegers 12 b.

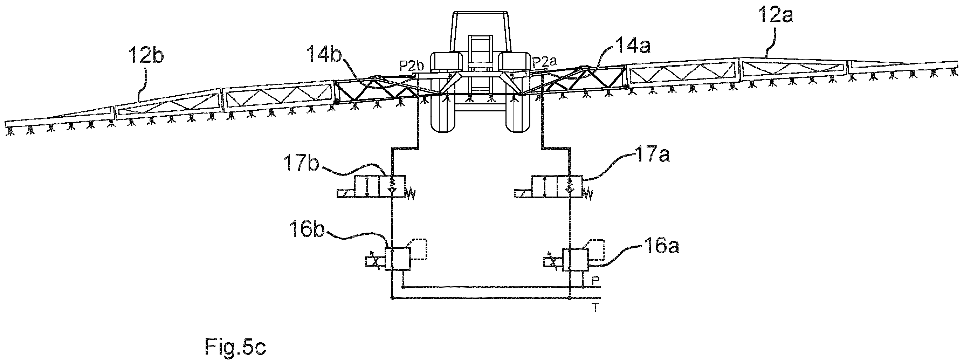

Figur 5c zeigt den Zustand nachdem das Verkippen des Verteilergestänges abgeschlossen ist. Es ist zu sehen, dass alle Sperrventile 17 a,b wieder geschlossen sind. In den stangenseitigen Kammern der Hydraulikzylinders 14 a,b herrschen die eingestellten Druckwerte p2 a,b.

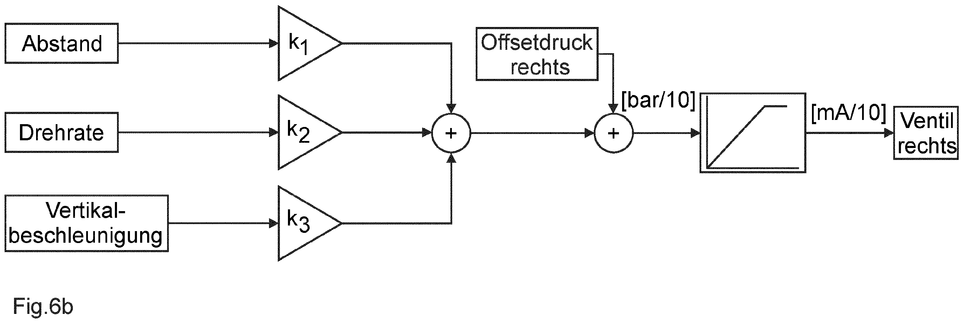

Figur 6 a,b zeigt schematisch einen beispielhaften Regelkreislauf, mit dem die Lage der Ausleger 12 a,b kontrolliert werden kann. Es ist zu sehen, dass verschiedene Messdaten als Eingangswerte für die Regelung dienen. Die Messdaten werden beispielsweise mittels der Sensorvorrichtung 20 a,b erfasst.

Im gezeigten Fall beinhalten die Eingangswerte den Abstand des Auslegers 12 a,b vom Boden und/oder Pflanzenbestand, die Drehrate des Auslegers 12 a,b, sowie die Vertikalbeschleunigung des Auslegers 12 a,b. Es ist zu verstehen, dass diese Beispiele keine ausschließliche Liste darstellen. Weiterhin müssen nicht alle gezeigten Messwerte als Eingangswerte verwendet werden.

Aus den einzelnen Messwerten wird unter Verwendung jeweiliger Regelparameter k1, k2, k3 ein gemeinsamer Regelwert bestimmt. Dabei ist zu beachten, dass die Werte k1, k2, k3 einfache Proportional-Faktoren sein können. Sie können aber auch die Form einer PID-Regelung haben. So ist es beispielsweise möglich, dass der mit "k1" bezeichnete Teil des Kreislaufs einer PID-Regelung mit der gemessenen Winkelabweichung als Eingangswert und einer vorbestimmten Winkelabweichung als Sollwert entspricht. Selbiges gilt für die anderen gezeigten Eingangswerte. Insbesondere kann der Teil, der sich auf die Vertikalbeschleunigung bezieht, eine PID-Regelung mit der gemessenen Vertikalbeschleunigung als Eingangswert und entweder 0 m/s² oder 9,81 m/s² als Sollwert besitzen.

Generell ist zu sagen, dass die Ausgangswerte der Teile k1, k2, k3 jeweils so geartet sind, dass sie den Ausleger 12 a,b von einem gemessenen Ist-Wert des entsprechenden Messwerts in einen gewollten Soll-Wert des entsprechenden Messwerts überführen.

Die Ausgangswerte der Teile k1, k2, k3 werden anschließend, beispielsweise additiv, kombiniert. Dies geschieht, um die Gesamtbewegung des Auslegers 12 a,b korrekt zu erfassen. So können beim Überfahren einer Bodenunebenheit beispielsweise der Ast k1 und der Ast k2 entgegengesetzte Signale ausgeben: Der Abstand des Auslegers 12 a,b zum Boden wird durch das Überfahren verringert, daher wird der entsprechende Ast k1 auf ein Anheben des Auslegers hin regeln. Gleichzeitig wirkt aber eine positive, also vom Boden Weg wirkende, Vertikalbeschleunigung auf den Ausleger 12 a,b. Der Ast k3 wird dementsprechend auf ein Absenken des Auslegers hin regeln. Durch das Kombinieren der Ausgangssignale können beide Komponenten berücksichtig werden, und es erfolgt keine entgegengesetzte Regelung, wie es bei zwei unabhängigen Regelsystemen auftreten könnte.

Wenn sich der Ausleger in Soll- oder Ruhelage befindet, ist das kombinierte Signal gleich 0, d.h., es wird kein Einfluss auf die Stellung des Auslegers 12 a,b genommen.

Das kombinierte Ausgangssignal wird dann jeweils mit einem Druckoffset kombiniert, der in Ruhelage an den beiden Seiten des Hydraulikzylinder 14 a,b herrscht. Der Druckoffset berücksichtigt dabei sowohl externe Kräfte, die in Solllage an dem Ausleger 12 a,b anliegen, als auch die Wirkflächen der Ringseiten . Solche Kräfte können beispielsweise auftreten, wenn das Gestänge nicht vollständig symmetrisch ausgeklappt ist. Sie können auch bei Hang- oder Kurvenfahrten auftreten. Dabei kann der Druckoffset individuell für die jeweiligen Hydraulikzylinder 14 a,b variieren. Der Druckoffset soll damit die tatsächlich an dem Verteilergestänge 10 in normalem Arbeitsbetrieb in Ruhelage anliegenden Kräfte berücksichtigen.

Abschließend wird jeweils ein Steuerungssignal für die Druckregelventile 16 a,b generiert, um Druckwerte für die Kammern der Stellvorrichtung 14 a,b zu generieren. Es ist möglich, wie in der Figur angedeutet, dass das Steuerungssignal auf einen maximalen Wert beschränkt wird. Damit können beispielsweise die auf das Verteilergestänge 10 während der Steuerung wirkenden Kräfte beschränkt werden.

Zusammenfassend sorgt also der gezeigte Regelkreis dafür, dass der Ausleger 12 a,b in einer Soll-Lage gehalten wird, beziehungsweise möglichst wenig aus der Soll-Lage ausgelenkt wird.

Die beschriebene Regelsteuerung kann beispielsweise in der Regeleinheit 2 implementiert sein.

Es ist zu beachten, dass im Allgemeinen bei Betrieb der beschriebenen Regelsteuerung die Sperrventile 17 a,b geöffnet sind, um eine schnelle Drucksteuerung in den Kammern der Hydraulikzylinder 14 a,b sowie der Verbindungsleitung 15 zu erreichen. Analoges gilt für die mit Bezug auf Figur beschriebene Ausführungsform des Geräts 1'. Die Sperrventile 17 a,b dienen im Allgemeinen dazu, die Positionen der Kolben der Hydraulikzylinder 14 a,b, und damit die Position des Auslegers, bei ausgeschalteter Regelung zu fixieren.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

## Patentansprüche

1. Landwirtschaftliches Gerät (1) zum Ausbringen von Material, wie Düngemittel, Pflanzenschutzmittel oder Saatgut, umfassend
ein beidseitig klappbares Verteilergestänge (10) mit einem Mittelteil (11) und zwei mit dem Mittelteil (11) durch Gelenke verbundene seitliche Ausleger (12 a,b);
eine erste hydraulische Stellvorrichtung (14 a), um einen der Ausleger (12 a) um eine, insbesondere erste, in Fahrtrichtung des landwirtschaftlichen Geräts (1) weisende Drehachse zu bewegen;
eine zweite hydraulische Stellvorrichtung (14 b), um den anderen Ausleger (12 b) um eine, insbesondere zweite, in Fahrtrichtung des landwirtschaftlichen Geräts (1) weisende Drehachse zu bewegen;
und
eine Regeleinheit (2);
wobei jeweils ein Druckregelventil (16 a,b) der ersten Stellvorrichtung (14 a) und der zweiten Stellvorrichtung (14 b) zugeordnet ist; und
wobei die Druckregelventile (16 a,b) von der Regeleinheit (2) ansteuerbar sind.

2. Landwirtschaftliches Gerät gemäß Anspruch 1, wobei der ersten Stellvorrichtung (14 a) und der zweiten Stellvorrichtung (14 b) jeweils ein dem jeweiligen Druckregelventil (16 a,b) zugeordnetes Sperrventil (17 a,b) zugeordnet ist.

3. Landwirtschaftliches Gerät gemäß Anspruch 1 oder 2, weiter umfassend eine einem Ausleger (12 a,b) zugeordnete Sensorvorrichtung (20 a,b), wobei die Sensorvorrichtung (20 a,b) vorzugsweise mit einem vorherbestimmten Abstand, insbesondere mit einem Abstand zwischen 1 m und 3 m, insbesondere zwischen 1 m und 2 m, zu der jeweiligen Drehachse angebracht ist.

4. Landwirtschaftliches Gerät gemäß Anspruch 3, wobei die Regeleinheit (2) dazu konfiguriert ist, die Druckregelventile (16 a,b) basierend auf Werten der Sensorvorrichtung (20 a,b) anzusteuern.

5. Landwirtschaftliches Gerät gemäß Anspruch 4, wobei die Regeleinheit (2) konfiguriert ist, über die Sensorvorrichtung (20 a,b) die Lage des jeweiligen Auslegers (12 a,b) zu ermitteln, bevorzugt über eine Messung des Abstands zum Boden und/oder Pflanzenbestand, die Drehrate auf einen Sollwert zu regeln und bevorzugt ine gemessene Vertikalbeschleunigung zu berücksichtigen.

6. Landwirtschaftliches Gerät gemäß einem der vorhergehenden Ansprüche, wobei die erste und die zweite Stellvorrichtung (14 a,b) als einfachwirkender Hydraulikzylinder ausgebildet sind.

7. Landwirtschaftliches Gerät gemäß einem der vorhergehenden Ansprüche, wobei die Druckregelventile (16 a,b) unabhängig voneinander ansteuerbar sind.

8. Landwirtschaftliches Gerät gemäß einem der vorhergehenden Ansprüche, wobei die jeweiligen Stellvorrichtungen (14 a,b) dazu geeignet sind, den jeweiligen Ausleger (12 a,b) von einer Arbeitsstellung in eine Transportstellung zu überführen.

9. Landwirtschaftliches Gerät gemäß einem der vorhergehenden Ansprüche, wobei dem ersten und dem zweiten Ausleger (12 a,b) jeweils ein Mittel (21 a,b) zugeordnet ist, welches eingerichtet ist, ein Überführen des jeweiligen Auslegers (12 a,b) von der Transportstellung in die Arbeitsstellung zu initiieren.

10. Verfahren zur Steuerung eines landwirtschaftlichen Geräts gemäß einem der vorhergehenden Ansprüche, umfassend die Schritte:
Einstellen eines ersten Solldrucks an der ersten Stellvorrichtung (14 a) mittels des zugeordneten Druckregelventils (16 a); und
Einstellen eines zweiten Solldrucks an der zweiten Stellvorrichtung (14 b) mittels des zugeordneten Druckregelventils (16 b).

11. Verfahren nach Anspruch 10, weiterhin umfassend die Schritte Bestimmen von angepassten Druckwerten für die jeweilige Stellvorrichtung (14 a,b); Ansteuern der Regelventile (16 a,b) zum Einstellen der bestimmten angepassten Druckwerte.

12. Verfahren nach Anspruch 10, wobei beim Bestimmen der angepassten Druckwerte wenigstens einer der folgenden Parameter berücksichtigt wird:
- eine für die Neigung des jeweiligen Auslegers (12 a,b) indikative Größe,
- eine für einen Abstand des jeweiligen Auslegers (12 a,b) zum Boden und/oder Pflanzenbestand indikative Größe,
- eine für die Drehrate des jeweiligen Auslegers (12 a,b) um eine in Fahrtrichtung weisende Drehachse indikative Größe,
- eine für einen Druck, insbesondere Offset-Druck, der jeweiligen Stellvorrichtung (14 a,b) indikative Größe.

13. Verfahren gemäß einem der Ansprüche 10 bis 12, weiterhin umfassend die Schritte
Erfassen einer Vertikalbeschleunigung eines Auslegers (12 a,b);
vorzugsweise Bestimmen einer auf die jeweilige Stellvorrichtung (14 a,b) aufgrund der erfassten Vertikalbeschleunigung wirkenden Kraft;
und Berücksichtigen der erfassten Vertikalbeschleunigung beim Bestimmen der angepassten Druckwerte.
